# EUROPÄISCHE PATENTSCHRIFT

(11) **EP 1 196 700 B1**
(45) Veröffentlichungstag und Bekanntmachung des Hinweises auf die Patenterteilung: **12.03.2003**
(21) Anmeldenummer: 00940238.9
(22) Anmeldetag: 11.05.2000
(51) Int. Cl.: F16H 55/18

(54) **ZAHNRADTRIEB**
GEAR DRIVE
DISPOSITIF D'ENGRENAGE

(30) Priorität: 24.06.1999 DE 19928960
(43) Veröffentlichungstag der Anmeldung: 17.04.2002
(73) Patentinhaber: Volkswagen Aktiengesellschaft, 38436 Wolfsburg (DE)
(72) Erfinder: VOIGT, Dieter, D-38110 Braunschweig (DE)
(86) Internationale Anmeldenummer: EP0004271
(87) Internationale Veröffentlichungsnummer: WO01001021

(56) Entgegenhaltungen:
- EP-A- 0 666 210
- EP-A- 0 881 412
- DE-A- 4 326 155
- PATENT ABSTRACTS OF JAPAN vol. 018, no. 183 (M-1584), 29. März 1994 (1994-03-29) & JP 05 340465 A (TOSHIBA MACH CO LTD), 21. Dezember 1993 (1993-12-21)

## Beschreibung

Die Erfindung betrifft einen Zahnradtrieb mit wenigstens einem ersten Zahnrad auf einer ersten Welle und einem über eine Schrägverzahnung mit dem ersten Zahnrad in Eingriff stehenden zweiten Zahnrad auf einer von der ersten Welle beabstandeten zweiten Welle, wobei axial zum zweiten Zahnrad ein das Zahnflankenspiel ausgleichendes drittes Zahnrad angeordnet ist, welches ebenfalls über eine Schrägverzahnung mit dem ersten Zahnrad in Eingriff steht und axial bzgl. des zweiten Zahnrades verschiebbar ist, gemäß dem Oberbegriff des Anspruchs 1, so wie es aus DE 43 96 155 bekannt ist.

Bei einem Zahnradtrieb zwischen zwei Wellen ist der Wellenabstand so auszulegen, daß weder ein zu geringes noch ein zu großes Zahnflankenspiel auftritt, da es sonst zu einem Klemmen oder Klappern kommt. Besonders bei Wellen mit hohen Schwell- oder Wechselmomenten, wie beispielsweise bei Kurbelwellen von Verbrennungsmotoren, ist bei hoher Verzahnungsqualität ein minimales Zahnflankenspiel der kämmenden Zahnräder eines Nebentriebes erforderlich, da sonst Laufgeräusche durch Anlagewechsel im Zahneingriff unvermeidlich sind. Dieses Problem verschärft sich zusätzlich durch unterschiedliche thermische Ausdehnungen der Werkstoffe der Zahnräder, welche üblicherweise aus Stahl gefertigt sind, und des Wellengehäuses, welches bei einer Brennkraftmaschine beispielsweise aus Aluminium hergestellt ist, denn durch unterschiedliche Wärmeausdehnung tritt aufgrund einer Änderung des Abstandes der Wellen eine Zahnflankenspieländerung auf, was beispielsweise beim Warmlaufen eines Verbrennungsmotors zu akustischen Nachteilen führt.

Aus der DE 43 26 155 A1 ist eine Zahnradstufe mit Zahnspielbeseitigung bekannt, wobei zum Ausgleich eines sich ändernden Zahnflankenspiels ein Zahnrad axial verschiebbar ist. Die Verstellung erfolgt dabei hydraulisch mittels einer Kolben-Zylinder-Anordnung. Ein derartiger Ausgleich eines sich durch Wärmeausdehnung ändernden Zahnflankenspiels ist jedoch im Betrieb aufwendig und bei der Herstellung kostenintensiv.

Der vorliegenden Erfindung liegt daher die Aufgabe zugrunde, einen Zahnradtrieb der obengenannten Art zur Verfügung zu stellen, wobei die obengenannten Nachteile überwunden werden und auf einfache und gleichzeitig präzise Weise ein sich aufgrund unterschiedlicher Wärmeausdehnung von Zahnrädern und Zahnradtriebgehäuse änderndes Zahnflankenspiel ausgeglichen wird.

Diese Aufgabe wird erfindungsgemäß durch einen Zahnradtrieb der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß zum temperaturabhängigen Verändern des Abstandes zwischen dem zweiten und dem dritten Zahnrad ein Dehnungselement vorgesehen ist, dessen Wärmeausdehnung derart gewählt ist, daß eine Spieländerung aufgrund einer wärmebedingten Änderung des Abstandes der ersten und zweiten Welle voneinander durch ein axiales Verschieben des dritten Zahnrades aufgrund einer Wärmeausdehnung des Dehnungselementes unter Berücksichtigung eines Schrägverzahnungseffektes ausgeglichen ist.

Dies hat den Vorteil, daß ein einmal eingestelltes, vorbestimmtes Zahnflankenspiel temperaturunabhängig konstant bleibt, da ein Spielausgleich automatisch temperaturinduziert erfolgt, ohne die Notwendigkeit einer aufwendigen hydraulischen Steuerung. Es sind mit der erfindungsgemäßen Anordnung relativ niedrige Schrägungswinkel der Verzahnung realisierbar, so daß sich eine hohe Verdrehfestigkeit im spielfreien Zahneingriff ergibt.

Zweckmäßigerweise ist das dritte Zahnrad mittels eines beispielsweise geradverzahnten Schiebesitzes axial verschiebbar auf der zweiten Welle angeordnet. Zum Verstärken der Kompensation der temperaturbedingten Zahnflankenspieländerung ist der Schiebesitz zwischen dem zweiten und dritten Zahnrad alternativ schrägverzahnt ausgebildet.

In einer bevorzugten Ausführungsform ist das Federmittel eine Tellerfeder, wobei die zweite Welle zweckmäßigerweise ein Gewinde zum Aufschrauben einer Mutter derart aufweist, daß die Tellerfeder zwischen der Mutter und dem dritten Zahnrad gehalten ist.

Beispielsweise ist das Dehnungselement als Dehnungsring ausgebildet.

In einer bevorzugten Ausführungsform ist ein Federmittel vorgesehen, welches das dritte Zahnrad axial in Richtung des zweiten Zahnrades mit Kraft beaufschlagt, wobei das Dehnungselement den Spielausgleich gegen die Kraft des Federmittels durchführt.

In einer alternativen bevorzugten Ausführungsform ist die zweite Welle als Hohlwelle ausgebildet ist und das Dehnungselement in der Hohlwelle angeordnet, wobei das dritte Zahnrad (48) mit seiner Nabe (50) in der Hohlwelle (44) mit Spiel radial gelagert ist.

In einer bevorzugten Weiterbildung der Erfindung ist die Dehnungsstange über einen Bund mit der zweiten Welle lösbar verbunden, wobei der Bund beispielsweise mit mehreren Schlitzen versehen und durch eine Schraube mit Klemmkonus an der zweiten Welle fixiert ist.

Zweckmäßigerweise sind die Zahnräder beidseits der zweiten Welle angeordnet und kämmen mit zwei einzelnen Zahnrädern der ersten Welle.

Zum Einsparen von Bauraum und Bauteilen ist in einer besonders bevorzugten Ausführungsform wenigstens eines der beiden Zahnräder der ersten Welle als Geberrad für eine Motorsteuerung ausgebildet, wobei zweckmäßigerweise das als Geberrad ausgebildete Zahnrad der ersten Welle wenigstens einen Fehlzahn aufweist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine erste bevorzugte Ausführungsform eines erfindungsgemäßen Zahnradtriebes in einer schematischen Schnittansicht,
- Fig. 2: eine zweite bevorzugte Ausführungsform eines erfindungsgemäßen Zahnradtriebes in einer schematischen Schnittansicht und
- Fig. 3: eine dritte bevorzugte Ausführungsform eines erfindungsgemäßen Zahnradtriebes in einer schematischen Schnittansicht

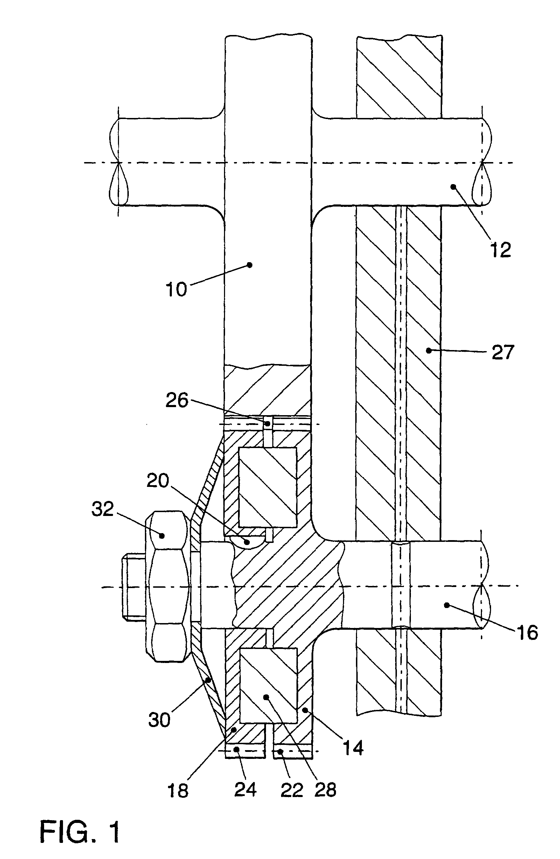

Die in Fig. 1 dargestellte erste bevorzugte Ausführungsform eines erfindungsgemäßen Zahnradtriebes umfaßt ein erstes Zahnrad 10 auf einer ersten Welle 12, ein zweites Zahnrad 14 auf einer zweiten Welle 16 und ein drittes Zahnrad 18, welches axial zum zweiten Zahnrad 14 auf der zweiten Welle 16 vorgesehen ist und mittels eines Schiebesitzes 20 axial bzgl. der zweiten Welle 16 verschiebbar ist. Beide Zahnräder 10 und 14 weisen eine Schrägverzahnung 22, 24 auf, mit der sie mit einer entsprechenden Schrägverzahnung 26 des ersten Zahnrades 10 kämmen. Die Wellen 12 und 16 sind in einem Gehäuse 27 gelagert.

Zwischen dem zweiten Zahnrad 14 und dem dritten Zahnrad 18 ist ein axial anliegender Dehnungsring 28 angeordnet. Ferner ist auf die zweite Welle 16 eine Tellerfeder 30 aufgeschoben, welche am dritten Zahnrad 18 mit definierter Vorspannung anschlägt und mittels einer auf die zweite Welle 16 aufgeschraubten Mutter 32 fixiert ist.

Die Tellerfeder 30 sichert eine spielfreie Axialanlage des Dehnungsringes 28 an den Zahnrädern 14 und 18 in allen Betriebssituationen.

Der Dehnungsring 28 hat einen von den Zahnrädern 14 und 18 verschiedenen Wärmeausdehnungskoeffizient, wobei dieser derart gewählt ist, daß die wärmebedingte, relative Änderung des Abstandes der Wellen 12 und 16 unter Berücksichtigung der Schrägverzahnungseffekte kompensiert wird. Ein bei dieser Anordnung einmal eingestelltes Zahnflankenspiel bleibt temperaturunabhängig konstant. Zur Verstärkung des Korrektureffektes des Dehnungsringes 28 ist der Schiebesitz 20 zwischen dem dritten Zahnrad 18 und der zweiten Welle 16 nicht geradverzahnt sondern schrägverzahnt ausgebildet.

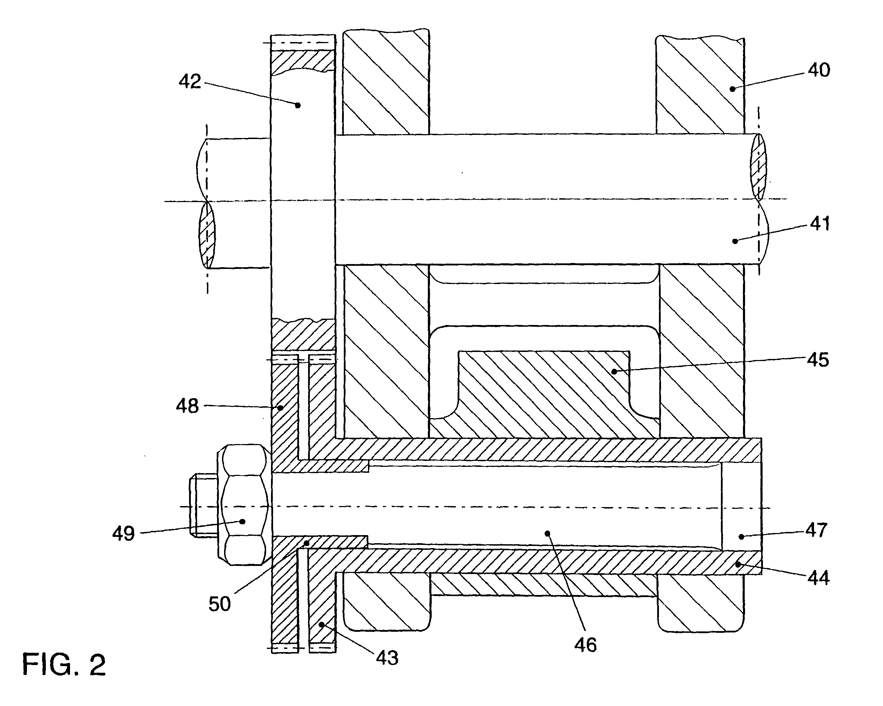

Bei der in Fig. 2 dargestellten alternativen bevorzugten Ausführungsform eines erfindungsgemäßen Zahnradtriebes ist in einem Maschinengehäuse 40 eine Welle 41, beispielsweise eine Kurbelwelle eines Verbrennungsmotors, gelagert und treibt mit ihrem Zahnrad 42 über ein weiteres Zahnrad 43 und über eine Hohlwelle 44 beispielsweise eine Unwuchtmasse 45 einer Massenausgleichseinrichtung an. Unter Nutzung der Baulänge der Hohlwelle 44 ist in dieser ein Dehnungselement 46 über seinen Bund 47 kraftschlüssig fixiert.

Dem Bund 47 gegenüberliegend ist ein weiteres Zahnrad 48 mit seiner Nabe 50 in der Hohlwelle 44 mit Spiel radial gelagert, wobei die axiale Lage des Zahnrades 48 durch eine Verschraubung 49 mit dem Dehnungselement als Dehnungsstange 46 vorgegeben ist.

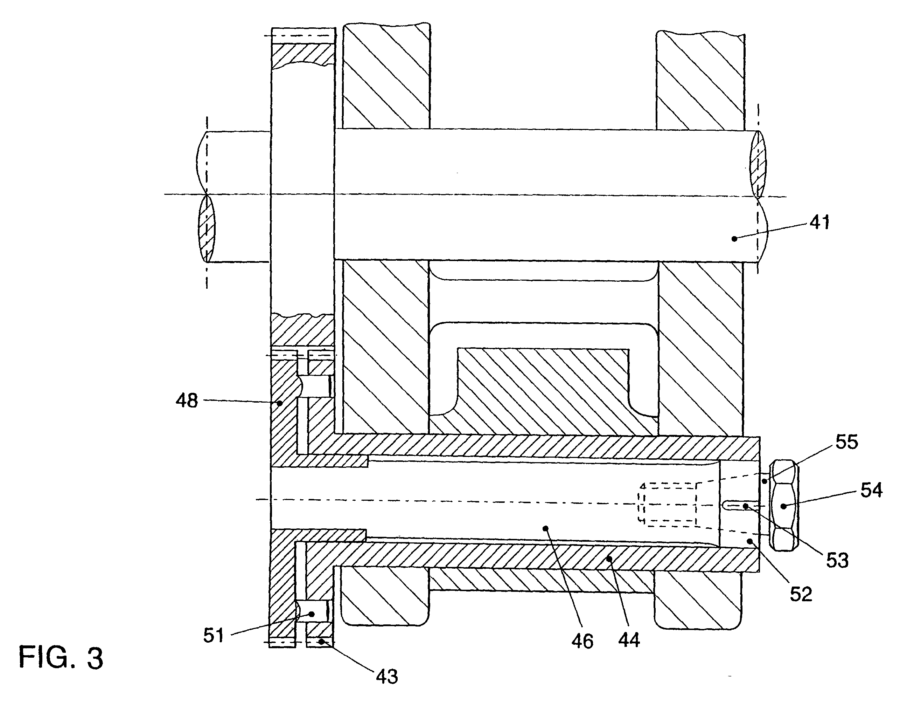

Die Fig. 3 zeigt eine weitere alternative Ausführungsform eines erfindungsgemäßen Zahnradtriebes, die es erlaubt, fertigungsbedingte Unterschiede im Abstand zwischen der Welle 41 und der Hohlwelle 44 und der resultierenden Auswirkung auf das Zahnflankenspiel der kämmenden Zahnräder 42 und 43 zu kompensieren. Hierzu sind die beiden Zahnräder 43 und 48 über eine Zapfenverbindung 51 axial zueinander verschieblich angeordnet, wobei der Festsitz zwischen Zahnrad 48 und der Dehnungsstange 46 hier durch Aufschrumpfen erfolgt.

Der Bund 52 der Dehnungsstange 46 wird bei dieser Ausführungsform erst nach der Montage der Zahnräder in Klemmverbindung zur Hohlwelle 46 gebracht, indem erst nach einer Axialpositionierung von Zahnrad 48 im Sinne einer Zahnflankenspiel-Grundeinstellung eine Schraube 54 mit einem Klemmkonus 55 angezogen wird. Mehrere Schlitze 53 am Umfang von Bund 52 erleichtern den Klemmvorgang. Ausgehend von dieser Zahnflankenspiel-Grundeinstellung bewirkt die Dehnungsstange 46 eine Kompensation temperaturbedingter Zahnflankenspielveränderungen.

Die Erfindung ermöglicht bei allen Betriebstemperaturen ein effektiv konstantes Zahnflankenspiel zwischen den Zahnrädern 42 und 43 bzw. 10 und 14. Toleranzbedingte Unterschiede der Einzelteile können durch eine Zahnflankenspiel-Grundeinstellung zusätzlich ausgeglichen werden.

Alternativ sind die beiden Zahnräder 43 und 48 beidseitig der Hohlwelle 44 angeordnet, wobei ein weiteres Zahnrad auf der Welle 41 vorgesehen ist. Diese Ausführungsform ist dann bevorzugt, wenn beispielsweise auf der Kurbelwelle 41 aufgrund zu geringer Kurbelwangendicken kein Platz für die Aufnahme des relativ breiten Zahnrades 42 vorhanden ist. Dann sind zwei schmalere Zahnräder auf zwei beabstandeten Kurbelwangen vorgesehen, die dann mit den beidseitig der Hohlwelle 44 befindlichen Zahnrädern 43 und 48 kämmen. Zur Kompensation des in dieser Alternative erforderlichen Mehraufwandes ist beispielsweise vorgesehen, daß das weitere Kurbelwellenzahnrad zusätzlich die Funktion eines Geberrades für eine Steuerelektronik eines Motors übernimmt. Hierzu entfallen beispielsweise ein oder zwei Zähne zur OT-Zuordnung, was für den "doppelten Zahnradtrieb" kein Nachteil ist.

## Patentansprüche

1. Zahnradtrieb mit wenigstens einem ersten Zahnrad (10; 42) auf einer ersten Welle (12; 41) und einem über eine Schrägverzahnung (22, 26) mit dem ersten Zahnrad (10; 42) in Eingriff stehenden zweiten Zahnrad (14; 43) auf einer von der ersten Welle (12; 41) beabstandeten zweiten Welle (16; 44), wobei axial zum zweiten Zahnrad (14; 43) ein das Zahnflankenspiel ausgleichendes drittes Zahnrad (18; 48) angeordnet ist, welches ebenfalls über eine Schrägverzahnung (24, 26) mit dem ersten Zahnrad (10; 43) in Eingriff steht und axial bzgl. des zweiten Zahnrades (14; 43) verschiebbar ist, **dadurch gekennzeichnet, daß**
zum temperaturabhängigen Verändern des Abstandes zwischen dem zweiten und dem dritten Zahnrad (14, 18; 43, 48) ein Dehnungselement (28; 46) vorgesehen ist, dessen Wärmeausdehnung derart gewählt ist, daß eine Spieländerung aufgrund einer wärmebedingten Änderung des Abstandes der ersten und zweiten Welle (12, 16; 41, 44) voneinander durch ein axiales Verschieben des dritten Zahnrades (18; 48) aufgrund einer Wärmeausdehnung des Dehnungselementes (28; 46) unter Berücksichtigung eines Schrägverzahnungseffektes ausgeglichen ist.

2. Zahnradtrieb nach Anspruch 1,
**dadurch gekennzeichnet, daß**
das dritte Zahnrad (18) mittels eines Schiebesitzes (20) axial verschiebbar auf der zweiten Welle (16) angeordnet ist.

3. Zahnradtrieb nach Anspruch 2,
**dadurch gekennzeichnet, daß**
der Schiebesitz (20) mit einer geraden oder schrägen Verzahnung ausgebildet ist.

4. Zahnradtrieb nach einem der vorhergehenden Ansprüche,
**dadurch gekennzeichnet, daß**
das Dehnungselement als Dehnungsring (28) oder Dehnungsstange (46) ausgebildet ist.

5. Zahnradtrieb nach einem der vorhergehenden Ansprüche,
**dadurch gekennzeichnet, daß**
ein Federmittel (30) vorgesehen ist, welches das dritte Zahnrad (18) axial in Richtung des zweiten Zahnrades (14) mit Kraft beaufschlagt.

6. Zahnradtrieb nach Anspruch 7,
**dadurch gekennzeichnet, daß**
das Dehnungselement (28) den Spielausgleich gegen die Kraft des Federmittels (30) durchführt.

7. Zahnradtrieb nach Anspruch 5 oder 6,
**dadurch gekennzeichnet, daß**
das Federmittel (30) eine Tellerfeder ist.

8. Zahnradtrieb nach einem der vorhergehenden Ansprüche,
**dadurch gekennzeichnet, daß**
die zweite Welle (44) als Hohlwelle ausgebildet ist und das Dehnungselement (46) in der Hohlwelle angeordnet ist.

9. Zahnradtrieb nach Anspruch 9,
**dadurch gekennzeichnet, daß**
das dritte Zahnrad (48) mit seiner Nabe (50) in der Hohlwelle (44) mit Spiel radial gelagert ist.

10. Zahnradtrieb nach einem der Ansprüche 4 bis 9,
**dadurch gekennzeichnet, daß**
die Dehnungsstange (46) über einen Bund (47) mit der zweiten Welle (44) verbunden ist.

11. Zahnradtrieb nach Anspruch 10,
**dadurch gekennzeichnet, daß**
die Verbindung zwischen der Dehnungsstange (46) und der Hohlwelle (44) durch den Bund (52) lösbar ist.

12. Zahnradtrieb nach Anspruch 10 oder 11,
**dadurch gekennzeichnet, daß**
der Bund (52) mit mehreren Schlitzen (53) versehen und durch eine Schraube (54) mit Klemmkonus (55) an der zweiten Welle (44) fixiert ist.

13. Zahnradtrieb nach einem der vorhergehenden Ansprüche,
**dadurch gekennzeichnet, daß**
die Zahnräder (43, 48) beidseits der zweiten Welle (44) angeordnet sind und mit zwei einzelnen Zahnrädern der ersten Welle (41) kämmen.

14. Zahnradtrieb nach einem der vorhergehenden Ansprüche,
**dadurch gekennzeichnet, daß**
wenigstens eines der beiden Zahnräder der ersten Welle (41) als Geberrad für einen Motorsteuerung ausgebildet ist.

15. Zahnradtrieb nach Anspruch 14,
**dadurch gekennzeichnet, daß**
das als Geberrad ausgebildete Zahnrad der ersten Welle (41) wenigstens einen Fehlzahn aufweist.

## Claims

1. Gearwheel drive, with at least one first gearwheel (10; 42) on a first shaft (12; 41) and with a second gearwheel (14; 43) in engagement with the first gearwheel (10; 42) via a helical toothing (22, 26), on a second shaft (16; 44) spaced apart from the first shaft (12; 41), there being arranged axially in relation to the second gearwheel (14; 43) a third gearwheel (18; 48) which compensates the tooth-flank play and which is likewise in engagement with the first gearwheel (10; 43) via a helical toothing (24, 26) and is displaceable axially with respect to the second gearwheel (14; 43), **characterized in that**, for the temperature-dependent variation in the spacing between the second and third gearwheels (14, 18; 43, 48), an expansion element (28; 46) is provided, the thermal expansion of which is selected such that a change in play due to a heat-induced change in the spacing between the first and second shafts (12, 16; 41, 44) is compensated by virtue of an axial displacement of the third gearwheel (18; 48) due to a thermal expansion of the expansion element (28; 46), allowing for a helicaltoothing effect.

2. Gearwheel drive according to Claim 1, **characterized in that** the third gearwheel (18) is arranged axially displaceably on the second shaft (16) by means of a sliding fit (20).

3. Gearwheel drive according to Claim 2, **characterized in that** the sliding fit (20) is designed with a straight or helical toothing.

4. Gearwheel drive according to one of the preceding claims, **characterized in that** the expansion element is designed as an expansion ring (28) or expansion rod (46).

5. Gearwheel drive according to one of the preceding claims, **characterized in that** a spring means (30) is provided, which subjects the third gearwheel (18) to force axially in the direction of the second gearwheel (14).

6. Gearwheel drive according to Claim 7, **characterized in that** the expansion element (28) carries out the play compensation counter to the force of the spring means (30).

7. Gearwheel drive according to Claim 5 or 6, **characterized in that** the spring means (30) is a cup spring.

8. Gearwheel drive according to one of the preceding claims, **characterized in that** the second shaft (44) is designed as a hollow shaft and the expansion element (46) is arranged in the hollow shaft.

9. Gearwheel drive according to Claim 9, **characterized in that** the third gearwheel (48) is mounted with its hub (50) in the hollow shaft (44) radially with play.

10. Gearwheel drive according to one of Claims 4 to 9, **characterized in that** the expansion rod (46) is connected to the second shaft (44) via a collar (47).

11. Gearwheel drive according to Claim 10, **characterized in that** the connection between the expansion rod (46) and the hollow shaft (44) can be released by means of the collar (52).

12. Gearwheel drive according to Claim 10 or 11, **characterized in that** the collar (52) is provided with a plurality of slots (53) and is fixed to the second shaft (44) by means of a screw (54) having a clamping cone (55).

13. Gearwheel drive according to one of the preceding claims, **characterized in that** the gearwheels (43, 48) are arranged on both sides of the second shaft (44) and mesh with two individual gearwheels of the first shaft (41).

14. Gearwheel drive according to one of the preceding claims, **characterized in that** at least one of the two gearwheels of the first shaft (41) is designed as a transmitter wheel for an engine control.

15. Gearwheel drive according to Claim 14, **characterized in that** that gearwheel of the first shaft (41) which is designed as a transmitter wheel has at least one missing tooth.

## Revendications

1. Dispositif d'engrenage comprenant au moins un premier engrenage (10 ; 42) sur un premier arbre (12 ; 41) et un deuxième engrenage (14 ; 43) en prise avec le premier engrenage (10 ; 42) par le biais d'une denture hélicoïdale (22, 26) sur un deuxième arbre (16 ; 44) espacé du premier arbre (12 ; 41), un troisième engrenage (18 ; 48) compensant le jeu des flancs des dents étant disposé axialement par rapport au deuxième engrenage (14 ; 43), lequel est également en prise avec le premier engrenage (10 ; 43) par le biais d'une denture hélicoïdale (24, 26) et peut être déplacé axialement par rapport au deuxième engrenage (14 ; 43), **caractérisé en ce que** pour la variation en fonction de la température de la distance entre le deuxième et le troisième engrenages (14, 18 ; 43, 48), on prévoit un élément de dilatation (28 ; 46) dont la dilatation thermique est choisie de telle sorte qu'une variation du jeu en raison d'une variation due à la chaleur de la distance du premier et du deuxième arbre (12, 16 ; 41, 44) l'un par rapport à l'autre soit compensée par un déplacement axial du troisième engrenage (18 ; 48) en raison d'une dilatation thermique de l'élément de dilatation (28 ; 46) en tenant compte d'un effet de la denture hélicoïdale.

2. Dispositif d'engrenage selon la revendication 1, **caractérisé en ce que** le troisième engrenage (18) est disposé de manière déplaçable axialement au moyen d'un siège coulissant (20) sur le deuxième arbre (16).

3. Dispositif d'engrenage selon la revendication 2, **caractérisé en ce que** le siège coulissant (20) est réalisé avec une denture droite ou hélicoïdale.

4. Dispositif d'engrenage selon l'une quelconque des revendications précédentes, **caractérisé en ce que** l'élément de dilatation est réalisé en tant que bague de dilatation (28) ou de tige de dilatation (46).

5. Dispositif d'engrenage selon l'une quelconque des revendications précédentes, **caractérisé en ce qu'**il est prévu un moyen de ressort (30) qui sollicite axialement le troisième engrenage (18) avec une force dans la direction du deuxième engrenage (14).

6. Dispositif d'engrenage selon la revendication 7, **caractérisé en ce que** l'élément de dilatation (28) effectue la compensation du jeu à l'encontre de la force du moyen de ressort (30).

7. Dispositif d'engrenage selon la revendication 5 ou 6, **caractérisé en ce que** le moyen de ressort (30) est un ressort Belleville.

8. Dispositif d'engrenage selon l'une quelconque des revendications précédentes, **caractérisé en ce que** le deuxième arbre (44) est réalisé en tant qu'arbre creux et l'élément de dilatation (46) est disposé dans l'arbre creux.

9. Dispositif d'engrenage selon la revendication 8, **caractérisé en ce que** le troisième engrenage (48) est monté radialement avec un jeu avec son moyeu (50) dans l'arbre creux (44).

10. Dispositif d'engrenage selon l'une quelconque des revendications 4 à 9, **caractérisé en ce que** la tige de dilatation (46) est connectée par un épaulement (47) au deuxième arbre (44).

11. Dispositif d'engrenage selon la revendication 10, **caractérisé en ce que** la connexion entre la tige de dilatation (46) et l'arbre creux (44) est desserrable par le biais de l'épaulement (52).

12. Dispositif d'engrenage selon la revendication 10 ou 11, **caractérisé en ce que** l'épaulement (52) est pourvu de plusieurs fentes (53) et est fixé au deuxième arbre (44) par le biais d'une vis (54) avec un cône de serrage (55).

13. Dispositif d'engrenage selon l'une quelconque des revendications précédentes, **caractérisé en ce que** les engrenages (43, 48) sont disposés de part et d'autre du deuxième arbre (44) et s'engrènent avec deux engrenages individuels du premier arbre (41).

14. Dispositif d'engrenage selon l'une quelconque des revendications précédentes, **caractérisé en ce qu'**au moins l'un des deux engrenages du premier arbre (41) est réalisé en tant que roue de transmission pour une commande de moteur.

15. Dispositif d'engrenage selon la revendication 14, **caractérisé en ce que** l'engrenage réalisé en tant que roue de transmission du premier arbre (41) présente au moins une dent manquante.
